## Europäisches Patentamt
## European Patent Office
## Office européen des brevets

(11) Veröffentlichungsnummer: **0 084 592**
**B1**

(12)

# EUROPÄISCHE PATENTSCHRIFT

(45) Veröffentlichungstag der Patentschrift:
30.04.86

(51) Int. Cl.⁴: **H 04 L 25/36**, G 04 F 10/04,
H 04 L 25/17

(21) Anmeldenummer: 82107843.3

(22) Anmeldetag: 26.08.82

(54) Verfahren und Schaltungsanordnung zur Messung der Zeitdifferenz zwischen Abtastzeitpunkten zweier abgetasteter Signale, insbesondere Ein- und Ausgangssignale eines Abtastratenumsetzers.

(30) Priorität: 26.01.82 CH 476/82

(43) Veröffentlichungstag der Anmeldung:
03.08.83 Patentblatt 83/31

(45) Bekanntmachung des Hinweises auf die Patenterteilung:
30.04.86 Patentblatt 86/18

(84) Benannte Vertragsstaaten:
AT BE CH DE FR GB IT LI LU NL SE

(56) Entgegenhaltungen:
EP - A - 0 017 251
FR - A - 2 045 661
FR - A - 2 103 567

IEEE INTERNATIONAL CONFERENCE ON ACOUSTICS, SPEECH AND SIGNAL PROCESSING, PROCEEDINGS, Band 1,3,30,31, März und 1. April 1981, Seiten 595-598, Sheraton Atlanta Hotel, Atlanta, USA, R. LAGADEC et al.: "A universal, digital sampling frequency converter for digital audio"

(73) Patentinhaber: Willi Studer AG, Fabrik für elektronische Apparate, Althardstrasse 30, CH-8105 Regensdorf (CH)

(72) Erfinder: Lagadec, Roger, Dr., Kiusdörtli 6, CH-8032 Zürich (CH)
Erfinder: McNally, Guy William Whitsey, Burrowswood Lodge Lawbrook Lane, Shere (Surrey) GU5 9QF (GB)
Erfinder: Pelloni, Daniele Pietro Carlo, Dr., Via Giuseppe Motta 13, CH-6648 Minusio (CH)

(74) Vertreter: EGLI-EUROPEAN PATENT ATTORNEYS, Horneggstrasse 4, CH-8008 Zürich (CH)

LIBER, STOCKHOLM 1986

## Beschreibung

Die vorliegende Erfindung betrifft ein Verfahren zur Ermittlung der Zeitdifferenz zwischen aufeinander folgenden Impulsen zweier Impulsfolgen, die unterschiedliche Frequenzen aufweisen, sowie eine Vorrichtung zur Durchführung dieses Verfahrens.

Aus IEEE, International Conference on Acoustics, Speed and Signal Processing, Proceedings, Seiten 595-598, ist ein universeller, digital arbeitender Abtastfrequenswandler für Digital-Audio bekannt. Dabei wird die Umwandlung eines ersten Signales mit einer ersten Abtastfrequenz in ein zweites Signal mit einer zweiten Abtastfrequenz mit Hilfe von Filtern erreicht. Die relative Zeitdifferenz zwishen Abtastzeitpunkten des ersten und des zweiten Signales enthält dabei die nötien Informtionen zur Steuerung der Filter. Diese Zeitdifferenz kann berechnet werden aus einer genauen Messung der Abtastperioden.

Zum Stand der Technik zählen ein Verfahren und eine Vorrichtung zur Durchführung dieses Verfahrens, den die Aufgabe zugrunde liegt, die Messung der mittleren Periodendauer eines einzigen periodischen Signals in kurzen Zeitabständen durchzuführen. Zu diesem Zweck werden Messwerte mehrerer aufeinander folgender Perioden zusammengezählt und daraus wird ein Mittelwert gebildet. Dazu werden die einzelnen Messwerte nacheinander in ein Register eingegeben und zur Bildung des Mittelwertes gemeinsam aus dem Register ausgelesen. Um so viele Mittelwerte zu erhalten wie Perioden gemessen werden, wird immer dann ein neuer Mittelwert gebildet, wenn ein neuer Messwert ins Register eingelesen wird. Je höher die geforderte Genauigkeit ist, um so öfter wird der einzelne Messwert für die Mittelwertbildung aus dem Register ausgelesen. Um statistische Fehler zu vermindern, werden aus den einzelnen Messwerten gebildete Impulssummen in ein weiteres Register eingelesen, um aus mehreren Impulssummen einen Mittelwert zu gewinnen.

Die Aufgabe der vorliegendenen Erfindung ist, ein Verfahren zur Messung der Zeitdifferenz zwischen zwei Taktzeiten zweier abgetasteter Signale, insbesondere eines Abtastratenumsetzers, zu schaffen, das einerseits mindestens der Signalqualität eines 16 -Bit-Formats entspricht, andererseits aber mit in Normalgeschwindigkeit arbeitenden, leicht erhältlichen, integrierten Schaltungen realisierbar ist. Es ist also nicht erforderlich, speziell schnelle Schalttechniken zu verwenden, die in letzter Konsequenz einer zukünftigen, nicht bekannten Schaltungstechnik angehören.

Es ist ferner Aufgabe der Erfindung, ein Verfahren zu schaffen, mit dem folgende Bedingungen bewältigt werden können: 1. Die eine Frequenz beispielsweise die Eingangsabtastfrequenz, ist kleiner oder gleich der anderen Freguenz, bzw. der Ausgangsabtastfrequenz und 2. die eine Frequenz, beispielsweise die Eingangsabtastfrequenz, ist grösser als die andere Frequenz bzw. die Ausgangsabtastfrequenz.

Es ist weiter Aufgabe der Erfindung, ein Verfahren abzugeben, das auch für zeitvariable Abtastfrequenzen die richtige Messung der Zeitdifferenz ergibt. Das heisst, das Verfahren soll für ein beliebiges Frequenzverhalten der beiden Frequenzen anwendbar sein.

Und schliesslich ist es Aufgabe der Erfindung, eine Schaltungsanordnung anzugeben, mit der das Verfahren gemäss der Erfindung durchgeführt werden kann.

Die Aufgabe wird durch die im kennzeichnenden Teil der unabhängigen Patentansprüche angegebenen Maßnahmen gelöst.

An sich ist es aus der EP-A-0017 251 bekannt, zur Erhöhung der Genauigkeit einer Frequenzmessung, laufend aktualisierte Mittelwerbe zu bilden, wobei allerdings Impulse eines stabilen Hochfrequenzgenerators benützt werden.

Zur eingehenden Erklärung der Erfindung werden die folgenden Figuren benützt:

Fig. 1 Teil der Schaltungsanordnung gemäss der Erfindung als Blockschaltbild, wie er zur Bestimmung der Zählfrequenz und der Steuerfrequenz in Funktion der Ein- und Ausgangsabtastfrequenz eingesetzt wird,

Fig. 2 A und B, eine graphische Darstellung des Begriffes der Zeitdifferenz,

Fig. 3 Blockschaltbild eines weiteren Teils der Schaltungsanordung, wie sie zur Durchführung der Zeitmessung verwendet wird,

Fig. 4 Schaltungsanordnung zur Mittelung der gemessenen Steuerperioden, und

Fig. 5 Schaltungsanordnung zur Durchführung arithmetischer Operationen im Bereich der Mittelungsbildung und Akkumulation.

Vor dem Eingehen auf die einzelnen Details soll im voraus in kommentierender Weise ein notwendiger, orientierender Ueberblick gegeben werden. Die klassische Methode zur Messung der Zeitdifferenz beruht einfachheitshalber, auf das Beispiel eines Abtastratenumsetzers bezogen, im Auszählen der Impulse zwischen einer Flanke des Eingangssignals und einer Flanke des Ausgangssignals. Je genauer nun die Zeitmessung innerhalb dieser Zeitdifferenz sein muss, desto dichter und kürzer müssen die Zählimpulse zwischen den beiden zu messenden-Flanken angeordnet sein, d. h. je höher die Frequenz der Zählimpulse gewählt wird, um so höher muss die Zählfrequenz des Zählers sein. Für besonders strenge Anforderungen an die Auflösung nimmt die Zählfrequenz an der üblichen Schaltungstechnik gemessen problematische Werte an.

Der Grundgedanke der vorliegenden Erfindung besteht darin, die Zeitmessung zwischen einer Flanke des Eingangssignals und einer Flanke des Ausgangssignals mit verhältnismässig beschränkter Auflösung durchzuführen, dafür aber das Resultat nachträglich durch Mittelwertbildung mit Hilfe von Werten nachfolgender Taktzeitmessungen zu verbessern. Dadurch wird die Messzeit innerhalb brauchbarer Grenzen wohl vergrössert, aber die Genauigkeit der Messung wird dadurch überproportional zum Aufwand erhöht. Wenn man beispielsweise einen im Vergleich zur klassischen Methode langsamen Zähler mit beschränkter Auflösung, angenommen $2^K$-Zustände, verwendet, dafür aber über mehrere perioden, beispielsweise $2^L$-Perioden, mittelt, erreicht man die gleiche Genauigkeit, wie wenn man einen sehr schnellen Zähler mit $2^{L+K}$-Zuständen verwendet, jedoch nachträglich keine Mittelwertbildung mehr durchführt. Dieser Zusammenhang kann relativ leicht aufgezeigt werden. Zur Durchführung dieses Verfahrens muss der Mittelwert laufend, d. h. nach jeder Periode, also bei jedem Ausgangszeitpunkt oder Takt, quasi neu gebildet werden. Die nachfolgende Bildung des laufend aktuellen Mittelwertes ist ebenfalls Bestandteil des hier offenbarten Verfahrens.

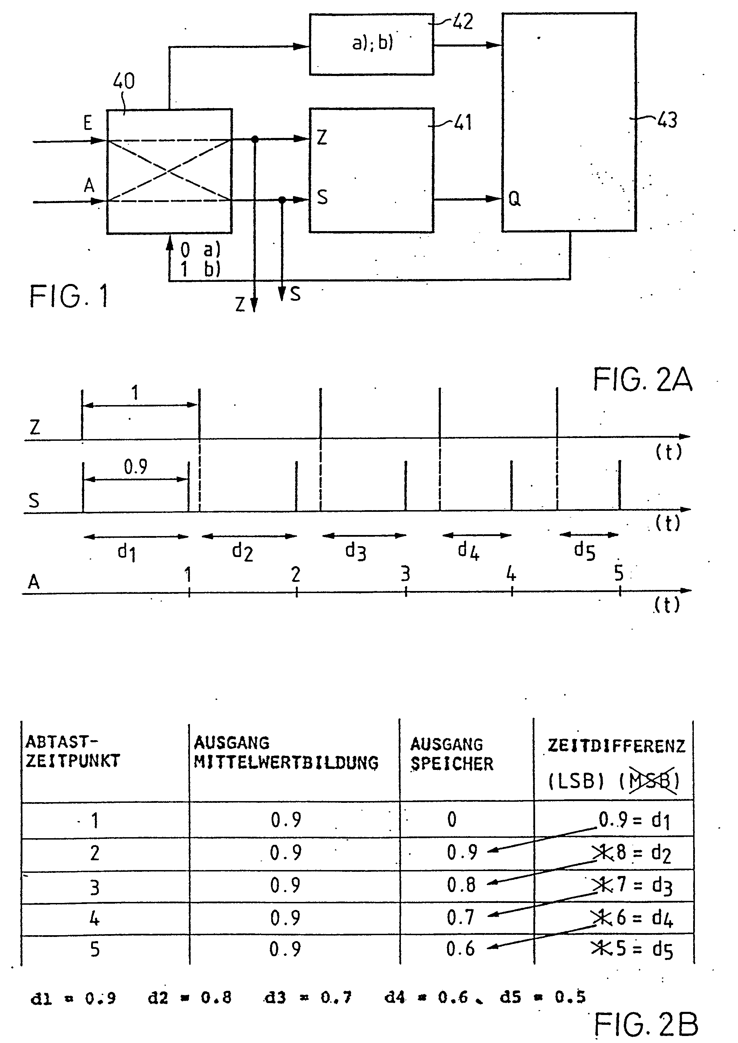

Figur 1 zeigt in Blockdarstellung, wie man alle möglichen Verhältnisse der Eingangsabtastrate zur Ausgangsabtastrate sowie den Fall zeitvariabler Abtastraten durch die Einführung der nachfolgend noch eingehend erklärten Begriffe Zählfrequenz und Steuerfrequenz in einheitlicher Form behandeln kann. Das Blockschema enthält in vereinfachter Form vier wesentliche Bausteine zur entsprechenden Erzeugung der Steuerfrequenz und der Zählfrequenz. Diese vier Bausteine sind ein Umschalter 40, eine Zählerschaltung 41, eine Temporärspeicherschaltung 42 und eine Entscheidungslogik 43. Die Entscheidungslogik 43 steuert das sehr vereinfacht dargestellte Umschaltnetzwerk 40, in das die Eingangsabtastfrequenz und die Ausgangsabtastfrequenz geführt werden und an deren Ausgang dann die Steuerfrequenz und die Zählfrequenz jeweils bereitstehen. Dieses Umschaltnetzwerk 40 wird vorteilhafterweise mit Hilfe eines 2-auf-1-Multiplexers realisiert. So gelangen die Eingangs- und Ausgangsabtastfrequenzen zum Umschalter 40, an dessen Ausgängen die Zählfrequenz und Steuerfrequenz erscheinen. Die Stellung des Umschalters wird durch die aktuellen Abtastfrequenzen, die direkt an den Ausgängen der Zählerschaltung 41 in paralleler Form abgelesen werden, sowie durch den vorherigen Schaltzustand des Umschalters 40, der im Speicher 42 festgehalten wird, bestimmt. Die Entscheidungslogik 43 sorgt dafür, dass die richtige Umschalterstellung in Funktion der vorliegenden Daten gesetzt wird.

Ohne hier auf alle Einzelheiten der Entscheidungslogik einzugehen, so muss diese doch, unter mehreren, beispielsweise die nachfolgend beschriebenen, oft auftretenden Fälle erkennen und entsprechend umsetzen:
  a) Die Eingangsabtastfrequenz ist stets eindeutig grösser als die Ausgangsabtastfrequenz; in diesem Falle sind die Steuerfrequenz mit der Eingangsabtastfrequenz und die Zählfrequenz mit der Ausgangsabtastfrequenz durch definierte Zuordnung identisch.
  b) Die Eingangsabtastfrequenz ist stets kleiner als die Ausgangsabtastfrequenz; in diesem Falle sind die Steuerfrequenz mit der Ausgangsabtastfrequenz und die Zählfrequenz mit der Eingangsabtastfrequenz durch definierte Zuordnung identisch.

Die Zählfrequenz ist bei zeitlich konstanten Abtastraten als geforderte Bedingung jeweils niedriger als die Steuerfrequenz. So erfolgt also in der in Figur 1 angegebenen Schaltung eine von den Eingangsdaten abhängige Dekläration der Eingangsabtastfrequenz und der Ausgangsabtastfrequenz zur Steuerfrequenz oder Zählfrequenz.

In Figur 2A wird der Begriff der Zeitdifferenz definiert. Die Zeitdifferenz ist der zeitliche Abstand zwischen der aktuellen Steuerflanke und der ersten, unmittelbar nach der aktuellen Steuerflanke auftretenden Zählerflanke. Die Zeitdifferenz wird in Funktion der Zählfrequenz definiert. Dazu wird der Zählperiode eine Zweierpotentzahl zugeordnet. Die Zeitdifferenz wird als ganzzahliger Bruchteil dieser Zahl dargestellt. So sieht man in Figur 2A auf der obersten Zeitachse die Zählfrequenz aufgetragen mit einem Zählpulsabstand, der Einfachheit halber 1 gewählt, auf der darunterliegenden Zeitachse die Steuerfrequenz mit einem Pulsabstand, der kleiner ist als der Pulsabstand der Zählfrequenz; man erinnere sich, dass die Zählfrequenz bei zeitlich konstanten Abtastraten niedriger als die Steuerfrequenz sein soll. Auf der untersten Zeitachse sind die Abtastzeitpunkte 1, 2, 3,... aufgezeichnet.

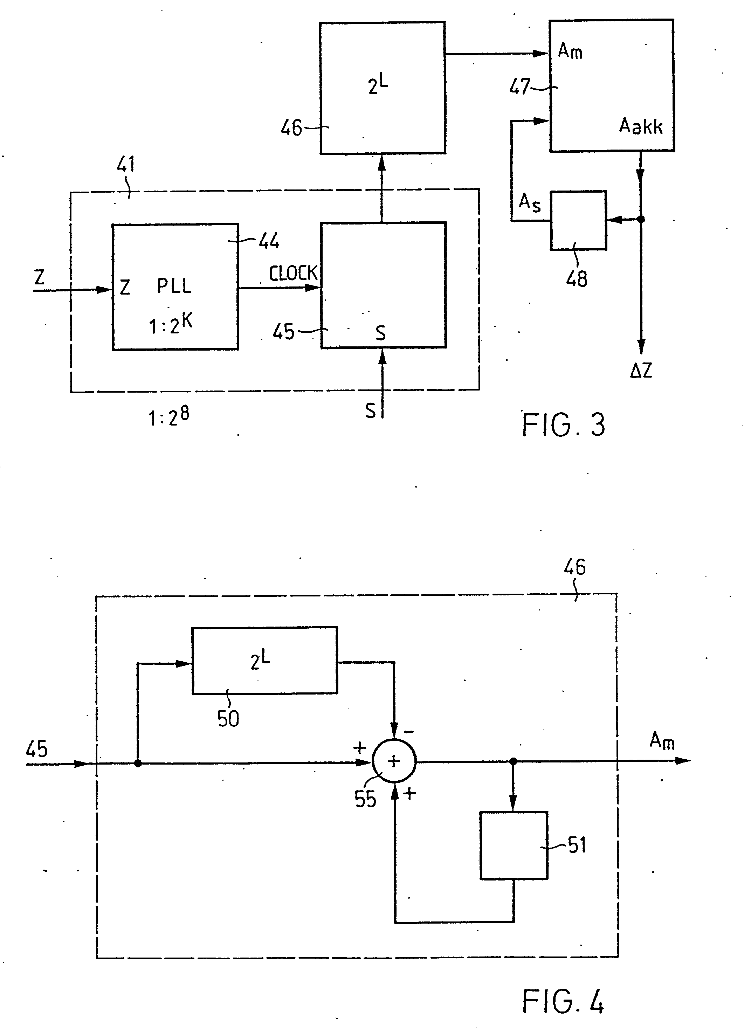

Die entsprechenden Zeitdifferenzen $d_1$, $d_2$, $d_3$ ... sind über der Zeitachse in bezug auf die Zählfrequenz und entsprechend dem Abtastzeitpunkt eingetragen. In der Tabelle der Figur 2B ist dieser Vorgang der Zeitdifferenz tabellarisch "noch einmal" dargestellt. Die Abtastzeitpunkte 1 bis 5 entsprechen denen der untersten Zeitachse in Figur 1A. Die Ausgangswerte der Mittelwertbildung, dies ist die zweite Kolonne der Tab'elle, entsprechen bei zeitlich konstanten Abtastraten jeweils 90 % der Steuerfrequenz des Steuerfrequenzpulsabstandes, bezogen auf den Pulsabstand 1 der Zählfrequenz. Die beiden nächsten Kolonnen beziehen sich auf Daten, die im Zusammenhang mit der Schaltung in Figur 3 besprochen werden, doch erkennt man anhand der darin eingetragenen Zahlenwerte, dass diese mit den gesuchten Zeitdifferenzen $d_1$ bis $d_5$ identisch sein müssen.

In Figur 3 sind in einem Blockschaltbild die essentiellen Funktionsbausteine zur Messung der Zeitdifferenz der beiden Taktfrequenzen dargestellt. Diese Grundbausteine bestehen aus einer phasenstarren Regelschleife (phase locked loop), dem PLL 44, sowie einer in Serie dazugeschaltete Zählerschaltung 45. Diese beiden Schaltungsblöcke bilden zusammen die Zählerschaltung 41 aus Figur 1. Die beiden Eingänge Z und S sind vorgesehen für die Zählfrequenz und für die Steuerfrequenz. Der Ausgang der Zählerschaltung führt auf eine Schaltung 46 zur Mittelung über die $2^L$-Werte aus dem Messwert für die aktuelle Steuerperiode, und über den Ausgang werden die Daten für den aktuellen Mittelwert der Steuerperiode auf eine Akkumulatorschaltung 47 geführt. Dem Akkumulator 47 ist in einer Schlaufenschaltung der Speicher 48 zugeordnet. Die Zählfrequenz wird mit Hilfe der PLL-Schaltung 44 um einen Faktor $2^K$ heraufgesetzt, beispielsweise $1:2^8$; dieser Faktor wird der Zählperiode zugeordnet und dient dazu, die Zeitdifferenz in binärer Form dazustellen, wie dies in Figur 2A gezeigt wird. Die so gewonnene, schnelle Abtastfolge wird an den Takt-Eingang der Zählerschaltung 45 angelegt. Diese Zählerschaltung 45, ein Bestandteil der Zählerschaltung 41, zählt nun solange, bis eine Steuerflanke am Start/Stop-Eingang erscheint. Zu diesem Zeitpunkt wird der Zählerstand der arithmetischen Mittelwertbildungsschaltung 46 zugeführt und gleichzeitig wird der Zähler zurückgesetzt. Nach jeder Steuerflanke erscheint am Ausgang der Mittelwertbildungsschaltung der laufend quasi neue Mittelwert von der Dauer einer Steuerperiode in binärer Form. Dieser Mittelwert wird zusammen mit dem vorangegangenen Wert der Zeitdifferenz dem Akkumulator 47 zugeführt, an dessen Ausgang dann die gewünschte Zeitdifferenz erscheint. Das Resultat der Zeitdifferenz wird ausserdem wieder dem Speicher 4ß zugeführt, damit dieser Wert bei der Messung der nächstfolgenden Steuerflanke für die Berechnung der neuen Zeitdifferenz verwendet werden kann. Ein Ueberlauf des Akkumulators ist belanglos, nur die $(K+L)$-Bits niedrigster Wertigkeit werden für die Zeitdifferenz berücksichtigt. Dabei ist $2^L$ die Anzahl der perioden, über welche gemittelt wird; $2^K$ ist der Erhöhungsfaktor der Abtastrate durch den PLL 44. Die Anfangsphase bei der Messung der Zeitdifferenz ist ebenfalls belanglos, der Speicher 48 wird daher jeweils mit dem Wert Null initialisiert.

Im Zusammenhang mit Figur 3 wird nochmals auf Figur 2B zurückgegriffen, in der anhand von vier Kolonnen die Zeitdifferenzbildung dargestellt ist. Es wird z. B. angenommen, dass die Zählfrequenz und die Steuerfrequenz zeitlich konstant sind und im Verhältnis 9:10 stehen. Obwohl die digitale Schaltung mit binären Zahlen operiert, wird die Rechenmethode mit Zahlen in Dezimaldarstellung demonstriert. Dies ändert am Prinzip nämlich nichts.

Die Berechnung wird durch den Akkumulator 47 und dem Speicher 48 in Figur 3 durchgeführt. Da die Abtastfrequenzen hier konstant sind, liefert die Mittelwertbildungseinheit 46 immer den gleichen Wert 0,9, was aus der zweiten Kolonne der Tabellendarstellung ersichtlich ist. Der Speicher 48 wird willkürlich mit dem Wert Null initialisiert, die Addition einer Konstante bei der Zeitdifferenzbildung ist nämlich belanglos, sie entspricht lediglich einer konstanten Verzögerung des Steuersignals gegenüber des Zählsignäls. In der letzten Kolonne der tabellarischen Darstellung nach Figur 2B ist die Zeitdifferenz in Form des Least Significant Bit (LSB) offenkundig dargestellt. Auf das Most Significant Bit (MSB) wird verzichtet, was durch eine symbolische Streichung angedeutet ist. Die zweitletzte Kolonne zeigt dann den Ausgangswert des Speichers 48, in den die zu den aktuellen Werten der Zeitdifferenz jeweils um einen Abtastzeitpunkt verschoben der vorangegangene Wert erscheint. Die gesuchten Zeitdifferenzen in diesem Beispiel betragen somit: $d_1 = 0,9$, $d_2 = 0,8$, $d_3 = 0,7$, $d_4 = 0,6$, $d_5 = 0,5$.

Figur 4 zeigt im Detail den Schaltungsteil 46; es ist eine Blockdarstellung für das Vorgehen zur Mittelung der gemessenen Steuerperioden. Vom K-Bit-langen Eingangswort wird das um $2^L$-Abtastwerte verzögerte, vorangegangene Einganswort subtrahiert. Zu diesem Zwischenresultat wird das in der vorhergehenden Steuerperiode ermittelte Ausgangsresultat addiert. Das Resultat dieser Addition stellt das aktuelle gemittelte Ausgangsresultat dar, wie es dem Akkumulator 47 in Figur 3 zugeführt wird. Dieses Resultat wird mit $(L+K)$-Bits dargestellt. Bis diese Schaltung eingeschwungen ist, muss die Zeitdauer von $2^L$-Abtastwerten gewartet werden. Dazu dient eine Verzögerungsleitung 50 zur Herstellung einer zeitlichen Mittelungsdistanz. Der Ausgang der Verzögerungsleitung 50 führt mit negativem Vorzeichen auf einen Additionsknoten, der auf einem weiteren Eingang mit positivem Vorzeichen die Signale für die aktuelle Steuerperiode von der Zählerschaltung 45 erhält. Eine weitere Verzögerungsleitung 51 verzögert den aktuellen Mittelwert um einen Abtastwert, de facto resultiert damit der vorangegangene Mittelwert, welcher mit positivem Vorzeichen auf den Additionsknoten 55 geführt wird. Um die Zeitdifferenz mit einer Genauigkeit von beispielsweise $2^{-15}$ bei Abtastfrequenzen in der Grössenordnung von (wie eingangs erwähnt) 50 kHz zu ermitteln, kann man die Zählfrequenz mit Hilfe des PLL 44 um 256, d. h. $K = 8$, erhöhen und anschliessend eine Mittelung über 128 Abtastwerte vornehmen, d. h. $L = 7$. Die Zählerschaltung zählt bis 512, und der Akkumulator besitzt 16 Bits. Die Steuerperiode beträgt etwa 20 Mikrosekunden, und die erreichbare Genauigkeit beträgt etwa 300 Picosekunden. Die an und für sich belanglose Verzögerung bei der Messung der ersten Zeitdifferenz beträgt gemäss diesem Beispiel 2,56 Millisekunden.

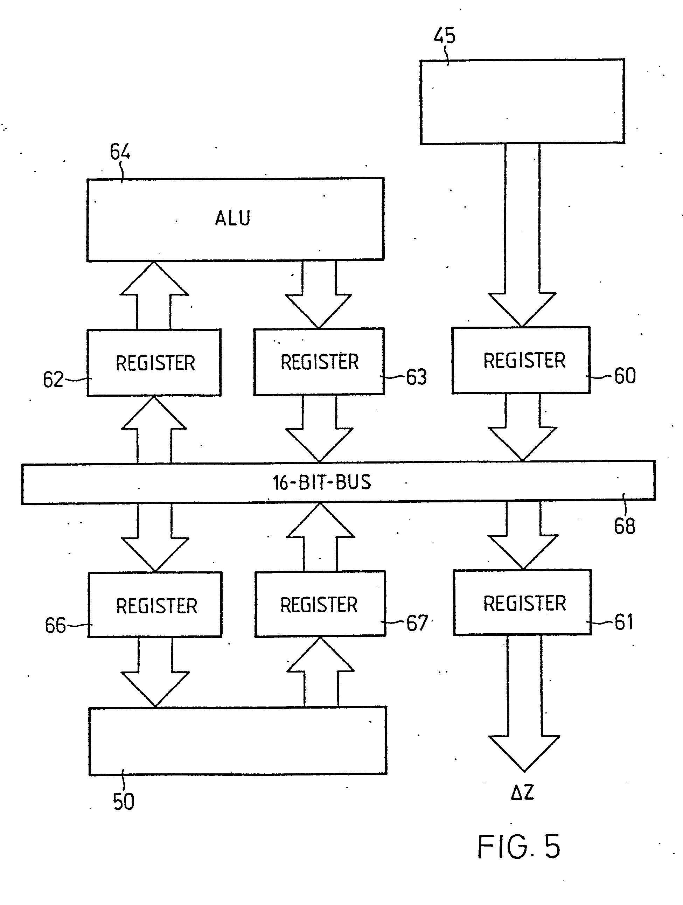

Figur 5 zeigt im Detail ein Beispiel, wie die arthmetischen Operationen zur Mittelwertbildung und zur Akkumulation durchgeführt werden können; sie bezieht sich auf die Mittelwertbildungseinheit 46 und die Akkumulatoreinheit 47. Alle Operationen werden mit Hilfe einer käuflichen ALU (Arithmetic Logic Unit) durchgeführt. Dazu wird eine Busstruktur für die Datenübertragung verwendet.

Die Daten aus der Zählerschaltung 45 gelangen durch Register 60 zum 16-Bit-Bus 68. Die gesuchte Zeitdifferenz erscheint am Ausgang von Register 61, das ebenfalls am 16-Bit-Bus angeschlossen ist. Am Bus ist auch über die Register 62 und 63 die ALU 64 angeschlossen, die sequentiell gemäss Mikroprogramm die erforderlichen arithmetischen Operationen durchführt. Die Verzögerungsleitung 50 in der Mittelwertbildungseinheit 46 kann nicht in der einfachen ALU 64 realisiert werden, sondern wird mit einem externen Speicher 50 realisiert. Dieser Speicher ist dem 16-Bit-Bus 68 durch die Register 66 und 67 angeschlossen.

Das angegebene Verfahren zur Messung der Zeitdifferenz zwischen Abtastzeitpunkten zweier abgetasteter Signale eignet sich für alle Applikationen, bei denen eine Referenz einer zu messenden zeitabhängigen Grösse der genannten Art als Massstab zugeordnet wird. So kann beispielsweise auch eine digitale Drehzahlregelung realisiert werden.

Zum Vergleich von mehr als zwei Signalfolgen wird ein erstes Vergleichsresultat aus zwei Signalfolgen einer dritten Signalfolge als Referenz gegenübergestellt und die Zeitdifferenz zwischen beiden gemessen. Entsprechend können weitere Signalfolgen, entweder permutiert oder in gewünschter Reihenfolge, jeweils zum Vergleich gebracht werden.

**Patentansprüche**

1. Verfahren zur Ermittlung der Zeitdifferenz zwischen aufeinander folgenden Impulsen zweier Impulsfolgen, die unterschiedliche Frequenzen aufweisen, dadurch gekennzeichnet,
-dass eine Taktfrequenz (CLOCK) bereitgestellt wird, die höner ist als die Frequenzen der beiden Impulsfolgen,
-dass diese Taktfrequenz (CLOCK) von der Frequenz einer der beiden Impulsfolgen (Z) abgeleitet wird,
-dass jene Schwingungen der Taktfrequenz (CLOCK) gezählt werden, die zwischen einem Impuls einer der beiden Impulsfolgen (S) und dem nächsten darauf folgenden Impuls dieser Impulsfolge (S) auftreten,
-dass aus einer Anzahl so gewonnen Zählwerte jeweils ein aktueller Mittelwert (Am) gebildet wird,
-dass zum aktuellen Mittelwert (Am) ein vorangehend gespeicherter Mittelwert (As) addiert wird und
-dass von dieser Summe ein Wert abgezogen wird, welcher der Dauer einer Zählperiode zwischen aufeinander folgenden Impulsen jener Impulsfolge entpsricht, von der die Taktfrequenz (CLOCK) abgeleitet worden ist, wobei der Rest die gesuchte Zeitdifferenz (d1, d2,.... dn) darstellt.

2. Verfahren nach Anspruch 1, dadurch gekennzeichnet, dass ermittelt wird, welche der Impulsfolgen die tiefere Frequenz aufweist, dass von der Frequenz der Impulsfolge mit der tieferen Frequenz, die als Zählerfrequenz (Z) dient, die Taktfrequenz (CLOCK) abgeleitet wird und dass die Impulse der anderen Impulsfolge, die eine Steuerfrequenz (S) darstellt, zur Steuerung der Zählung der Schwingungen der Taktfrequenz (CLOCK) dienen.

3. Verfahren nach Anspruch 1, dadurch gekennzeichnet, dass die eine der Impulsfolgen die die Eingangsabtastfrequenz aufweisende Impulsfolge eines Abtastratenumsetzers ist und dass die zweite Impulsfolge die die Ausgangsabtastfrequenz aufweisende Impulsfolge des genannten Umsetzers ist.

4. Verfahren nach Anspruch 1, dadurch gekennzeichnet, dass die Zählwerte gespeichert werden, dass vom jeweils ermittelten Zählwert einer der gespeicherten Zählwerte subtrahiert wird und dass das so gewonnene Resultat zum bereits früher gebildeten Mittelwert (Am) addiert wird.

5. Verfahren nach Anspruch 1, dadurch gekennzeichnet, dass die Zeitdifferenz (d1, d2,.... dn) zwischen den Flanken aufeinander folgender Impulse der beiden Impulsfolgen ermittelt wird.

6. Schaltungsanordnung zur Durchführung des Verfahrens nach Anspruch 1, gekennzeichnet durch
-einen Frequenzvervielfacher (44), in dem die Taktfrequenz (CLOCK) bereitgestellt wird,
-einen Zähler (45), dessen Eingang an den Frequenzvervielfacher (44) angeschlossen ist,
-eine Mittelungsschaltung (46), welche aus den im Zähler (45) durchgeführten Zählungen einen Mittelwert bildet und durch
-einen Akkumulator (47,48), in dem die Bestimmung der Zeitdifferenz (d1,.... dn) anhand der gebildeten Mittelwerte erfolgt.

7. Schaltungsanordnung nach Anspruch 6, dadurch gekennzeichnet, dass die Mittelungsschaltung (46) einen Summierer (55) mit drei Eingängen und einem Ausgang enthält, dass an den ersten Eingang des Summierers (55) die vom Zähler (45) kommende Leitung für die Zählwerte angeschlossen ist, dass der zweite und invertierte Eingang des Summierers (55) über einen Speicher (50) für die Zählwerte an die Leitung vom Zähler (45) angeschlossen ist und dass der Ausgang des Summierers (55) über einen Speicher (51) für den bereits gebildeten Mittelwert an den dritten Eingang des Additionsknotens (55) angeschlossen ist.

8. Schaltungsanordnung nach Anspruch 6, dadurch gekennzeichnet, dass der Akkumulator eine Akkumulatorschaltung (47) aufweist, an deren Ausgang ein Zwischenspeicher (48) für den jeweiligen Mittelwert angeschlossen ist und dass der Ausgang dieses Zwischenspeichers (48) an einen zweiten Eingang der Akkumulatorschaltung (47) angeschlossen ist.

9. Schaltungsanordnung nach Anspruch 5, dadurch gekennzeichnet, dass dem Frequenzvervielfacher (44) ein Umschalter (40) vorgeschaltet ist, dessen Eingängen die Impulsfolgen zugeführt werden können, dass dieser Umschalter (40) so ausgeführt ist, dass ein wahlweiser Anschluss der Eingänge an die Ausgänge desselben möglich ist und dass der für die Impulsfolge mit tieferer Frequenz vorgesehene Ausgang des Umschalters (40) an den Frequenzvervielfacher (44) und der für die Impulsfolge mit der höheren Frequenz vorgesehene Ausgang des Umschalters (40) an den Steuereingang des Zählers (45) angeschlossen ist.

10. Schaltungsanordnung nach Anspruch 8, dadurch gekennzeichnet, dass ein Temporärspeicher (42) vorgesehen ist, der zur Speicherung des jeweiligen Zustandes des Umschalters (40) bestimmt ist und dass dieser Speicher (42) an einen Logikschaltkreis (43) angeschlossen ist, der die Aenderung des Zustandes des Umschalters (40) veranlassen kann.

**Claims**

1. A method for measuring the time difference between subsequent pulses of two rows of pulses of different frequencies, characterized in
   - that a clock frequency (CLOCK) is being used, which is higher than the frequencies of the two rows of pulses,
   - that the clock frequency (CLOCK) is derived from the frequency of one of both rows (Z) of pulses,
   - that the oscillations of the clock frequency (CLOCK) between a puls of one of the row (S) of pulses and the following puls of this rows (S) are counted,
   - that an actual medium value (Am) is being created from the values counted this way,
   - that a previously stored medium value (As) is added to the actual medium value (Am), and
   - that a value corresponding to the duration of the counting periode between subsequent pulses of a row is being subtracted from this sum, from which row the clock frequency (CLOCK) has been derived, so that the remaining portion indicates the desired time difference $(d_1, d_2, \ldots d_n)$.

2. A method according to claim 1, characterized in that the pulse row with the lower frequency is being determined, that the clock frequency (CLOCK) is derived from the frequency of the row with the lower frequency, which serve as counter frequency (Z), and that the pulses of the other row of pulses, representing a control frequency (S), control the oscillation of the clock frequency (CLOCK).

3. A method according to claim 1, characterized in that one of the rows is the one having the input scanning frequency of a scanning rate converter, and that the second row is the one having the output scanning frequency of said converter.

4. A method according to claim 1, characterized in that the values counted are being stored, that one of the stored values is being subtracted from the counted value, and that the result so received is added to the medium value (Am) created earlier.

5. A method according to claim 1, characterized in that the time difference $(d_1, d_2, \ldots d_n)$ between the edges of subsequent pulses of both rows are being measured.

6. An apparatus for performing the method according to claim 1, characterized by
   - a frequency multiplier (44), in which the clock frequency (CLOCK) is being prepared,
   - a counter (45), of which the input is being connected to the frequency multiplier (44),
   - a medium value circuit (46), which creates a medium value from values counted by the counter (45), and
   - an accumulator (47,48), in which the time difference $(d_1, \ldots d_n)$ is created by means of the medium values.

7. An apparatus according to claim 6, characterized in that the medium value circuit (46) comprises a summing device (55) with three inputs and one output, that the line for the counted values from the counter (45) is connected with the first input of the summing device (55), that the second and inverted input of the summing device (55) is connected via a storage (50) for the counted values to the line from the counter (45), and that the output of the summing device (55) is connected via a storage (51) for said medium values to the third input of the addition junction (55).

8. An apparatus according to claim 6, characterized in that the accumulator comprises an accumulator circuit (47), the output of which is being connected with an intermediate storage (48) for the actual medium value, and that the output of this intermediate storage (48) is connected with a second input of the accumulator circuit (47).

9. An apparatus according to claim 6, characterized in that a reversing switch (40) is connected before the frequency multiplier (44), to the inputs of which pulse rows are supplyable, that this switch (40) is so designed, that a selectable connection of the inputs to the outputs thereof are possible, and that the output of the switch (40) provided for the pulse row with lower frequency is connected to the frequency multiplier (44), and that output of the switch (40) provided for the pulse row with higher frequency is connected with the control input of the counter (45).

10. An apparatus according to claim 8, characterized in that a temporary storage (42) is being provided, which is intended for storing the actual situation of the switch (40), and that this storage (42) is connected with a logic circuit (43), which is capable of changing the situation of the switch (40).

## Revendications

1. Procédé pour mesurer l'intervalle de temps entre des impulsions successives de deux séries d'impulsions de fréquences différentes, caractérisé en ce qu'il y a production d'une fréquence de répétition (HORLOGE) qui est plus élevée que les fréquences des deux séries d'impulsions, que cette fréquence de répétition (HORLOGE) est déduite de la fréquence de l'une des deux séries d'impulsions (z), que les oscillations de la fréquence de répétition (HORLOGE) qui se produisent entre une impulsion de l'une des deux séries d'impulsions (s) et l'impulsion qui la suit immédiatement dans cette série d'impulsions (s) sont comptées, qu'à partir d'un certain nombre de valeurs de comptage ainsi obtenues une valeur moyenne actuelle (Am) est déterminée, qu'à la valeur moyenne actuelle (Am) une valeur moyenne (As) précédemment mise en mémoire est ajoutée et que de cette somme est soustraite une valeur qui correspond à la durée d'une période de comptage entre deux impulsions successives de la série d'impulsions d'où la fréquence de répétition (HORLOGE) a été dérivée, le reste représentant l'intervalle de temps cherché (d1,d2,..., dn).

2. Procédé selon la revendication 1, caractérisé en ce que, parmi les séries d'impulsions, celle qui a la plus basse fréquence est déterminée, que la fréquence de répétition (HORLOGE) est dérivée de la fréquence de la série d'impulsions de plus basse frequence qui sert de fréquence de comptage (z) et que les impulsions de l'autre série d'impulsions, qui représente une fréquence pilote (s), servent à la commande du comptage des oscillations de la fréquence de répétition (HORLOGE).

3. Procédé selon la revendication 1, caractérisé en ce que l'une des séries d'impulsions est la série d'impulsions d'un convertisseur de taux d'exploration qui a la fréquence d'exploration d'entrée et que la deuxième série d'impulsions est la série d'impulsions du convertisseur en question qui a la fréquence d'exploration de sortie.

4. Procédé selon la revendication 1, caractérisé en ce que les valeurs de comptage sont enregistrées en mémoire, que de chaque valeur de comptage obtenue l'une des valeurs de comptage enregistrées en mémoire est soustraite et que le résultat ainsi obtenu est ajouté à la valeur moyenne (Am) déjà précédemment déterminée.

5. Procédé selon la revendication 1, caractérisé en ce que l'intervalle de temps (d1,d2,...dn) entre les pentes d'impulsions successives des deux séries d'impulsions est déterminé.

6. Circuit pour l'application du procédé selon la revendication 1, caractérisé en ce qu'il comprend un multiplicateur de fréquence (44) dans lequel la fréquence de répétition (HORLOGE) est mise à disposition, un compteur (45) dont l'entrée est reliée au multiplicateur de fréquence (44), un circuit de détermination de moyenne (46) qui, à partir des comptages effectués dans le compteur (45), détermine une valeur moyenne et un accumulateur (47,48) dans lequel l'intervalle de temps (d1,...dn) est déterminé d'après les valeurs moyennes obtenues.

7. Circuit selon la revendication 6, caractérisé en ce que le circuit de détermination des moyennes (46) contient un additionneur (55) comportant trois entrées et une sortie, que la première entrée de l'additionneur (55) est reliée au conducteur provenant du cnmpteur (45) et fournissant les valeurs comptées, que la deuxième entrée, inversée, de l'additionneur (55) est reliée, par l'intermédiaire d'une mémoire (50) conservant les valeurs comptées, au conducteur provenant du compteur (45) et que la sortie de l'additionneur (55) est reliée, par l'intermédiaire d'une mémoire (51) conservant la valeur moyenne déjà déterminée, à la troisiéme entrée du noeud d'addition (55).

8. Circuit selon la revendication 6, caractérisé en ce que l'accumulateur comporte un circuit d'accumulateur (47) dont la sortie est reliée à une mémoire intermédiaire (48) conservant la valeur moyenne dans chaque cas et que la sortie de cette mémoire intermédiaire (48) est reliée à une deuxième entrée du circuit d'accumulateur (47).

9. Circuit selon la revendication 5, caractérisé en ce qu'est monté en avant du multiplicateur de fréquence (44) un commutateur (40) dont les entrées peuvent recevoir les séries d'impulsions, que ce commutateur (40) a une structure telle que ses entrées peuvent être reliées de n'importe quelle manière à ses sorties, que la sortie du commutateur (40) prévue pour la suite d'impulsions de basse fréquence est reliée au multiplicateur de fréquence (44) et que la sortie du commutateur (40) prévue pour la suite d'impulsions de fréquence élevée est reliée à l'entrée de commande du compteur (45).

10. Circuit selon la revendication 8, caractérisé en ce ou'il comprend une mémoire temporaire (42) destinée à l'enregistrement de l'état du commutateur (40) à chaque instant et en ce que cette mémoire (42) est reliée à un circuit logique (43) cui peut provoquer une modification de l'état du commutateur (40).

FIG. 1

FIG. 2A

| ABTAST-ZEITPUNKT | AUSGANG MITTELWERTBILDUNG | AUSGANG SPEICHER | ZEITDIFFERENZ (LSB) ~~(MSB)~~ |
|---|---|---|---|
| 1 | 0.9 | 0 | 0.9 = $d_1$ |
| 2 | 0.9 | 0.9 | ~~0.~~8 = $d_2$ |
| 3 | 0.9 | 0.8 | ~~0.~~7 = $d_3$ |
| 4 | 0.9 | 0.7 | ~~0.~~6 = $d_4$ |
| 5 | 0.9 | 0.6 | ~~0.~~5 = $d_5$ |

$d1 = 0.9 \quad d2 = 0.8 \quad d3 = 0.7 \quad d4 = 0.6 \quad d5 = 0.5$

FIG. 2B

FIG. 3

FIG. 4

3

FIG. 5